# EUROPEAN PATENT SPECIFICATION

(11) **EP 3 742 036 B1**
(45) Date of publication and mention of the grant of the patent: **01.11.2023**
(21) Application number: 20164609.8
(22) Date of filing: 20.03.2020
(51) Int. Cl.: F16L 25/00, F16L 25/14, F16L 19/028, F16L 19/02

(54) **CONNECTOR ASSEMBLY WITH CORRUGATED STEEL PIPE AND CONNECTING METHOD**
VERBINDERANORDNUNG MIT GEWELLTEM STAHLROHR UND VERBINDUNGSVERFAHREN
ENSEMBLE CONNECTEUR AVEC TUYAU EN ACIER ONDULÉ ET PROCÉDÉ DE CONNEXION

(30) Priority: 08.05.2019 IT 201900006625
(43) Date of publication of application: 25.11.2020
(73) Proprietor: EUROTIS S.r.l., 20094 Corsico, MI (IT)
(72) Inventor: FRANCHI, Andrea Luigi, 20081 ABBIATEGRASSO MI (IT)
(74) Representative: Modiano, Micaela Nadia

(56) References cited:
- JP-A- H09 229 253
- US-A- 5 857 716
- US-A1- 2004 212 191

## Description

The present invention relates to a connector assembly comprising a connector for corrugated steel pipes and a connecting method. More specifically, the invention relates to a connector assembly for pipes that makes it possible to connect pipes of any diameter.

As is known, connectors for pipes are distributed on the market which can be installed with steel pipes. The technique of connecting a corrugated pipe and a connector occurs by way of providing a flange (or binder) on the end of the pipe. The flange is provided by compressing two corrugations of the pipe, using manual or automatic apparatus. The hydraulic seal between the pipe and the connector is provided by interposing a flat gasket between the flat surface of the flange made on the pipe and the flat surface present on the connector.

The mechanical seal occurs by screwing a threaded nut which abuts on the lip of the flange of the pipe and, by being screwed onto the connector, creates an integral bond between the pipe and the connector.

This connection procedure for the connection of steel pipes, by creating a flange, is currently limited to a few nominal diameters, generally up to the DN25 size. For larger diameters, currently different systems are used for connections between the pipe and the connector, because there is no method for providing flanges on pipe diameters of such large sizes. JPH09229253 discloses a connector assembly for corrugated pipes for connecting pipe members having different diameters.

The aim of the present invention is to provide a connector for corrugated steel pipes that can be used to connect pipes with a nominal diameter which is smaller than the diameter of the connector.

Within this aim, an object of the present invention is to provide a connector for pipes and a corresponding method, which make it possible to use a single type of connector to connect a plurality of pipes that have different diameters.

Another object of the present invention is to provide a connector for pipes that can be of any type, TEE, 90° elbow, 45° elbow, sleeve, FM and FF couplings, etc.

Another object of the present invention is to provide a connector for pipes and a corresponding method that are highly reliable, easily and practically implemented and of low cost.

This aim and these and other objects which will become better apparent hereinafter are achieved by a connector assembly according to claim 1.

Further characteristics and advantages of the invention will become better apparent from the detailed description of a preferred, but not exclusive, embodiment of the connector and of the connecting method according to the invention, illustrated by way of non-limiting example in the accompanying drawings wherein:

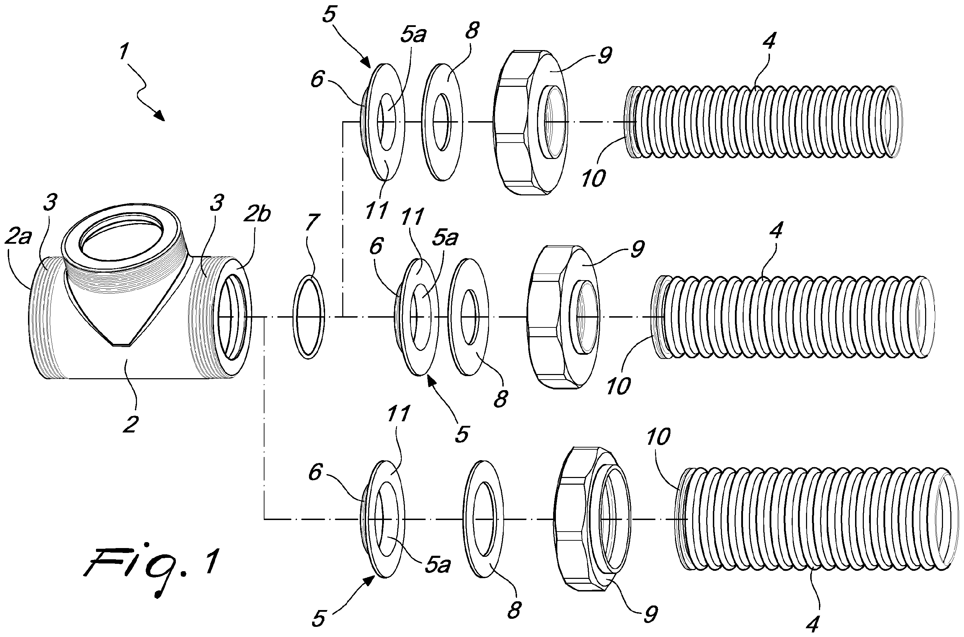

Figure 1 is an exploded perspective view of the connector according to the invention paired with three different diameters of pipe;

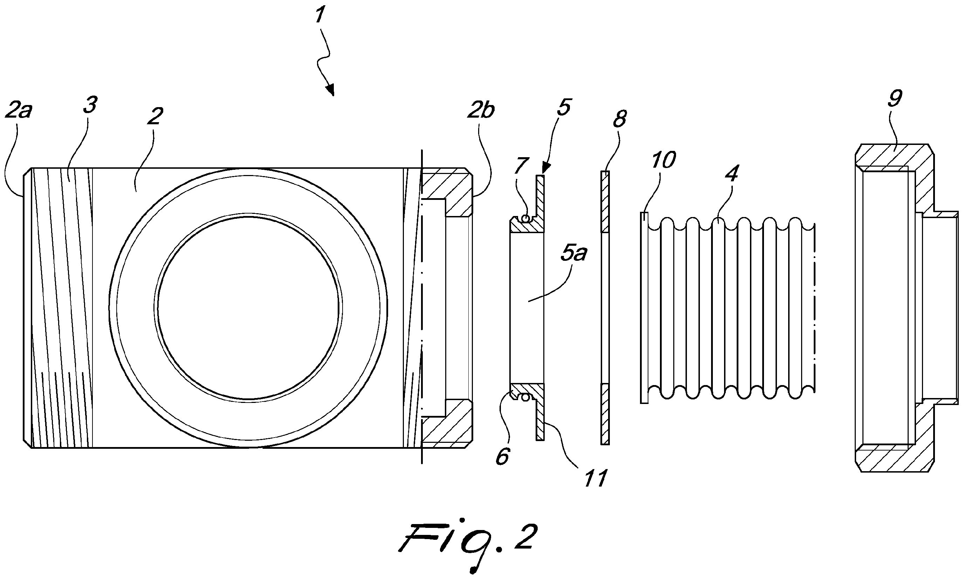

Figure 2 is an exploded longitudinal cross-sectional view of the connector according to the invention and the corresponding pipe to be connected;
Figure 3 is a longitudinal cross-sectional view of the connector according to the invention with the corresponding pipe in the connected condition;

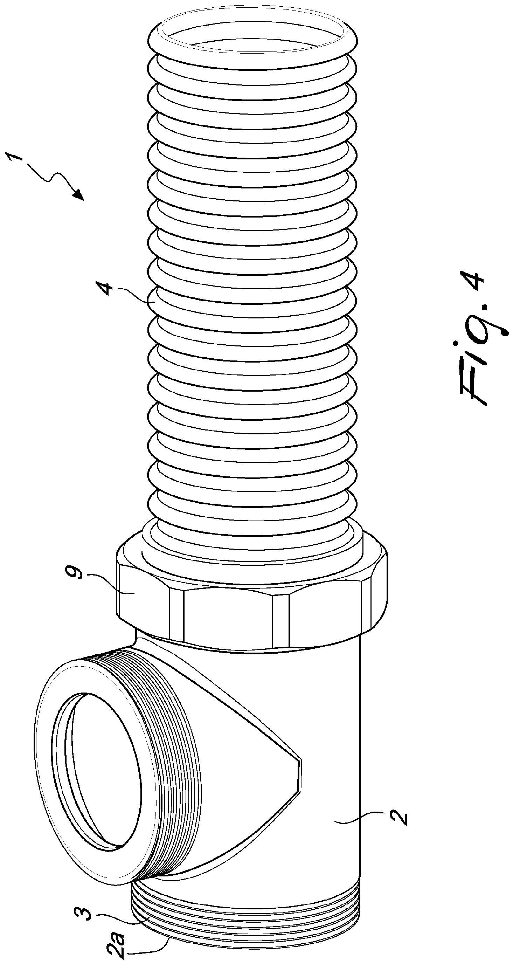

Figure 4 is a perspective view of the connector according to the invention with the corresponding pipe in the connected condition.

With reference to the figures, the connector for corrugated steel pipes according to the invention, generally designated by the reference numeral 1, comprises a connector body 2, variously shaped, for example TEE, 45° elbow, 90° elbow etc., which is provided with at least two openings 2a, 2b, each one of which is provided with an adapted external threading 3.

The connector body 2 is adapted to enable the connection of a corrugated pipe 4, made of steel.

In order to connect the connector body 2 to the pipe 4, there is at least one reduction element 5 which is conveniently shaped like an annular platelike element, and is provided at one of its faces with a raised portion 6 which is adapted to be coupled inside at least one of the two openings 2a, 2b.

Conveniently, the rim of the openings 2a and 2b is flat so as to couple with the portion of the reduction element 5 that defines an annular crown around the raised portion 6.

A gasket element 7 is interposed between the reduction element 5 and the opening 2a, 2b, and an additional gasket element, of the flat type, 8, is coupled on the flat face of the reduction element 5, opposite the face from which the raised portion 6 extends.

The connection between the body 2 of the reduction element and the pipe 4 then occurs by using a threaded nut 9, provided with a central hole through which the pipe 4 passes, which is screwed on the threading 3 of the connector body 2.

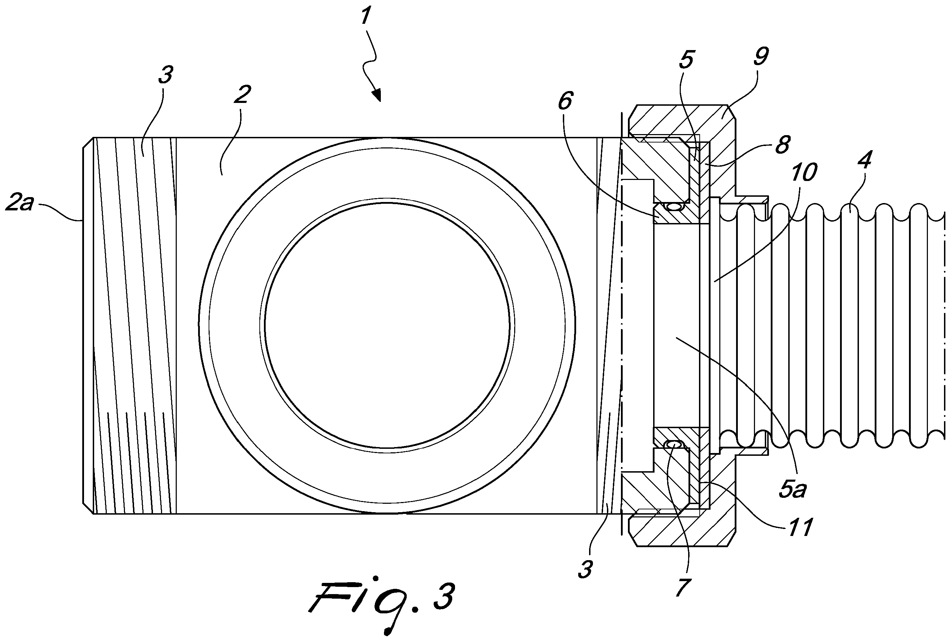

The gasket element 8 ends up between the reduction element 5 and the nut 9, as clearly illustrated in Figure 3.

The use of the reduction element 5 therefore makes it possible to create a flat surface on the connector body with a reduced passage hole, 5a, which makes it possible to couple pipes of smaller diameter than the diameter of the opening 2a, 2b of the connector body 2.

Use of the connector 1 according to the invention is as follows.

The operator provides a connector body 2 in order to connect a corrugated steel pipe 4, making a flange 10 at the end of the pipe 4. Subsequently the operator couples at least one reduction element 5 with a flat face 11 to at least one of the two openings 2a, 2b of the connector 2, after interposition of the gasket element 7 which is conveniently of the O-ring type.

At this point the operator provides the flat gasket 8 and the lock nut 9. The pipe 4 to be connected is placed with the flange 10 against the flat gasket 8 which rests on the flat surface 11 of the reduction element 5 which is inserted into the connector 2, with the nut 9 (strung onto the pipe before making the flange 10) making it possible for it to be clamped against the connector body 2, by being screwed onto the external threading 3 of the connector body 2.

In practice it has been found that the connector and the method described above make it possible to connect the connectors intended for determined pipe diameters to corrugated steel pipes having a smaller diameter, by using a reduction element, which defines the flat face on the body of the connector with a passage hole of reduced diameter, corresponding to the diameter of the pipe that it is desired to connect.

The connector and the method, thus conceived, are susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A connector assembly comprising a connector (1) for corrugated steel pipes (4) and a corrugated steel pipe having a nominal diameter that is smaller than a diameter of an opening of the connector, the connector comprising a connector body (2) which is provided with at least two openings (2a, 2b), and at least one reduction element (5), wherein said reduction element is adapted to be coupled to at least one of said openings (2a, 2b) of said connector body (2), said reduction element (5) being adapted to define an inlet diameter for the pipe that is smaller than the diameter of the at least one of said openings (2a, 2b) of the body (2) of the connector, said reduction element (5) comprising a flat face (11) provided with a hole (5a) and a raised portion (6) which extends at an opposite face, which is opposite to the flat face (11), said raised portion (6) being adapted to engage the at least one of said openings (2a, 2b) of said connector body (2) by being inserted into said at least one of said openings (2a, 2b), said opposite face being configured to abut against the at least one of said openings (2a, 2b), externally to said one opening (2a, 2b).

2. The connector assembly according to claim 1, **characterized in that** it comprises, between said reduction element (5) and said opening (2a, 2b) of the connector, a gasket (7) of the O-ring type.

3. The connector assembly according to claim 1, **characterized in that** it comprises a flat gasket (8) which is configured to be coupled between the flat face (11) of said reduction element (5) and a flange (10) of the end of said pipe (4).

4. The connector assembly according to one or more of the preceding claims, **characterized in that** it comprises a nut (9) which is configured to allow screwing onto a threading (3) defined on an external surface of said connector body (2), at said opening (2a, 2b) of said connector body (2).

5. The connector assembly according to one or more of the preceding claims, **characterized in that** said nut (9) is provided internally with a hole for the passage of said pipe (4) to be connected.

6. The connector assembly according to one or more of the preceding claims, **characterized in that** said nut (9) is configured to clamp said flange (10) of the pipe (4) against said flat face (11) of the reduction element (5), after the interposition of said flat gasket (8).

7. A method for connecting corrugated steel pipes which comprises the steps of:
- providing a connector (1) which has at least two openings (2a, 2b);
- providing a corrugated steel pipe (4) to be connected and providing a flange (10) on one end of said pipe (4); the corrugated steel pipe (4) having a nominal j J diameter that is smaller than an opening of the connector (1);
- inserting a reduction element (5) into at least one of said openings (2a, 2b) after interposing a gasket element (7), said reduction element (5) being provided with a flat face (11), with a central hole (5a), in order to reduce the diameter of said opening (2a, 2b), and with an opposite face being opposite to said flat face (11), said opposite face being configured to abut against one of said openings (2a, 2b), externally to said opening (2a, 2b);
- providing a flat gasket (8) to be coupled to the flat face (11) of said reduction element;
- placing the flange (10) of the pipe (4) against the flat face (11) after interposing said flat gasket (8);
- tightening a fastening nut (9) on a threading (3) provided at the outer surface of the connector body (2), at said openings (2a, 2b);
- said nut (9) clamping said flange (10) of the pipe (4) against said flat face (11) of the reduction element (5), after interposing said flat gasket (8).

## Patentansprüche

1. Eine Verbinderanordnung, die ein Verbindungselement (1) für Wellblechrohre (4) und ein Wellblechrohr umfasst, das einen Nenndurchmesser hat, der kleiner ist als ein Durchmesser einer Öffnung des Verbindungselements,
wobei das Verbindungselement Folgendes umfasst:
einen Verbindungskörper (2), der mit mindestens zwei Öffnungen (2a, 2b) versehen ist, und mindestens ein Reduktionselement (5), wobei das Reduktionselement ausgebildet ist, um mit mindestens einer der Öffnungen (2a, 2b) des Verbindungskörpers (2) gekoppelt zu werden, wobei das Reduktionselement (5) ausgebildet ist, um einen Einlassdurchmesser für das Rohr zu bestimmen, der kleiner ist als der Durchmesser der mindestens einen der Öffnungen (2a, 2b) des Körpers (2) des Verbindungselements, wobei das Reduktionselement (5) eine flache Seite (11) umfasst, die mit einem Loch (5a) und einem erhöhten Abschnitt (6) versehen ist, welcher sich an einer gegenüberliegenden Seite, die der flachen Seite (11) gegenüberliegt, erstreckt; wobei der erhöhte Abschnitt (6) ausgebildet ist, um durch Einführen in die mindestens eine der Öffnungen (2a, 2b) in die mindestens eine der Öffnungen (2a, 2b) des Körpers (2) einzugreifen, wobei die gegenüberliegende Seite ausgebildet ist, um an der mindestens einen der Öffnungen (2a, 2b), außerhalb der einen Öffnung (2a, 2b), anzuliegen.

2. Die Verbinderanordnung gemäß Anspruch 1, **dadurch gekennzeichnet, dass** sie zwischen dem Reduktionselement (5) und der Öffnung (2a, 2b) des Verbindungselements eine Dichtung (7) vom O-Ring-Typ umfasst.

3. Die Verbinderanordnung gemäß Anspruch 1, **dadurch gekennzeichnet, dass** sie eine Flachdichtung (8) umfasst, die ausgebildet ist, um zwischen der flachen Seite (11) des Reduktionselements (5) und einem Flansch (10) des Endes des Rohrs (4) angeschlossen zu werden.

4. Die Verbinderanordnung gemäß einem oder mehreren der obigen Ansprüche, **dadurch gekennzeichnet, dass** sie eine Mutter (9) umfasst, die ausgebildet ist, um das Aufschrauben auf ein Gewinde (3) zu ermöglichen, welches auf einer Außenfläche des Verbindungskörpers (2), an der Öffnung (2a, 2b) des Verbindungskörpers (2), bestimmt ist.

5. Die Verbinderanordnung gemäß einem oder mehreren der obigen Ansprüche, **dadurch gekennzeichnet, dass** die Mutter (9) innen mit einem Loch zum Hindurchführen des anzuschließenden Rohrs (4) versehen ist.

6. Die Verbinderanordnung gemäß einem oder mehreren der obigen Ansprüche, **dadurch gekennzeichnet, dass** die Mutter (9) ausgebildet ist, um den Flansch (10) des Rohrs (4) nach Dazwischenlegen der Flachdichtung (8) gegen die flache Seite (11) des Reduktionselements (5) zu drücken.

7. Ein Verfahren zum Anschließen von Wellblechrohren, das folgende Schritte umfasst:
- das Bereitstellen eines Verbindungselements (1), das mindestens zwei Öffnungen (2a, 2b) hat;
- das Bereitstellen eines anzuschließenden Wellblechrohrs (4) und eines Flanschs (10) an einem Ende des Rohrs (4); wobei das Wellblechrohr (4) einen Nenndurchmesser hat, der kleiner ist als eine Öffnung des Verbindungselements (1) ;
- das Einsetzen eines Reduktionselements (5) in mindestens eine der Öffnungen (2a, 2b) nach dem Dazwischenlegen eines Dichtungselements (7), wobei das Reduktionselement (5) mit einer flachen Seite (11), mit einem zentralen Loch (5a), versehen ist, um den Durchmesser der Öffnung (2a, 2b) zu verkleinern, und mit einer gegenüberliegenden Seite, die der flachen Seite (11) gegenüberliegt, wobei die gegenüberliegende Seite ausgebildet ist, um an einer der Öffnungen (2a, 2b), außerhalb der Öffnung (2a, 2b), anzuliegen;
- das Bereitstellen einer Flachdichtung (8), die mit der flachen Seite (11) des Reduktionselements gekoppelt werden soll;
- das Positionieren des Flanschs (10) des Rohrs (4) an der flachen Seite (11) nach Dazwischenlegen der Flachdichtung (8);
- das Festziehen einer Befestigungsmutter (9) an einem Gewinde (3), das an der Außenfläche des Verbindungskörpers (2), an den Öffnungen (2a, 2b), angebracht ist;
- wobei die Mutter (9) nach dem Dazwischenlegen der Flachdichtung (8) den Flansch (10) des Rohrs (4) gegen die flache Seite (11) des Reduktionselements (5) drückt.

## Revendications

1. Ensemble connecteur comprenant un connecteur (1) pour des tuyaux en acier ondulé (4) et un tuyau en acier ondulé ayant un diamètre nominal qui est inférieur à un diamètre d'une ouverture du connecteur,
le connecteur comprenant :
un corps de connecteur (2) qui est prévu avec au moins deux ouvertures (2a, 2b) et au moins un élément de réduction (5), dans lequel ledit élément de réduction est adapté pour être couplé à au moins l'une desdites ouvertures (2a, 2b) dudit corps de connecteur (2), ledit élément de réduction (5) étant adapté pour définir un diamètre d'entrée pour le tuyau qui est inférieur au diamètre de la au moins une desdites ouvertures (2a, 2b) du corps (2) du connecteur, ledit élément de réduction (5) comprenant une face plate (11) prévue avec un trou (5a) et une partie relevée (6) qui s'étend au niveau d'une face opposée, qui est opposée à la face plate (11), ladite partie relevée (6) étant adaptée pour mettre en prise la au moins une desdites ouvertures (2a, 2b) dudit corps de connecteur (2) en étant insérée dans ladite au moins une desdites ouvertures (2a, 2b), ladite face opposée étant configurée pour venir en butée contre la au moins une desdites ouvertures (2a, 2b), à l'extérieur de ladite une ouverture (2a, 2b).

2. Ensemble connecteur selon la revendication 1, **caractérisé en ce qu'**il comprend, entre ledit élément de réduction (5) et ladite ouverture (2a, 2b) du connecteur, un joint (7) de type joint torique.

3. Ensemble connecteur selon la revendication 1, **caractérisé en ce qu'**il comprend un joint plat (8) qui est configuré pour être couplé entre la face plate (11) dudit élément de réduction (5) et une bride (10) de l'extrémité dudit tuyau (4).

4. Ensemble connecteur selon une ou plusieurs des revendications précédentes, **caractérisé en ce qu'**il comprend un écrou (9) qui est configuré pour permettre le vissage sur un filetage (3) défini sur une surface externe dudit corps de connecteur (2), au niveau de ladite ouverture (2a, 2b) dudit corps de connecteur (2).

5. Ensemble connecteur selon une ou plusieurs des revendications précédentes, **caractérisé en ce que** ledit écrou (9) est prévu intérieurement avec un trou pour le passage dudit tuyau (4) à raccorder.

6. Ensemble connecteur selon une ou plusieurs des revendications précédentes, **caractérisé en ce que** ledit écrou (9) est configuré pour serrer ladite bride (10) du tuyau (4) contre ladite face plate (11) de l'élément de réduction (5), après l'interposition dudit joint plat (8).

7. Procédé pour raccorder des tuyaux en acier ondulé, comprenant les étapes consistant à :
prévoir un connecteur (1) qui a au moins deux ouvertures (2a, 2b) ;
prévoir un tuyau en acier ondulé (4) à raccorder et prévoir une bride (10) sur une extrémité dudit tuyau (4) ; le tuyau en acier ondulé (4) ayant un diamètre nominal qui est inférieur à une ouverture du connecteur (1) ;
insérer un élément de réduction (5) dans au moins l'une desdites ouvertures (2a, 2b) après l'interposition d'un élément de joint (7), ledit élément de réduction (5) étant prévu avec une face plate (11), avec un trou central (5a), afin de réduire le diamètre de ladite ouverture (2a, 2b) et avec une face opposée qui est opposée à ladite face plate (11), ladite face opposée étant configurée pour venir en butée contre l'une desdites ouvertures (2a, 2b), à l'extérieur de ladite ouverture (2a, 2b) ;
prévoir un joint plat (8) à coupler à la face plate (11) dudit élément de réduction ;
placer la bride (10) du tuyau (4) contre la face plate (11) après l'interposition dudit joint plat (8) ;
serrer un écrou de fixation (9) sur un filetage (3) prévu au niveau de la surface externe du corps de connecteur (2), au niveau desdites ouvertures (2a, 2b) ;
ledit écrou (9) serrant ladite bride (10) du tuyau (4) contre ladite face plate (11) de l'élément de réduction (5), après l'interposition dudit joint plat (8).
